# EUROPEAN PATENT APPLICATION

(11) **EP 2 869 428 A1**
(43) Date of publication of application: **06.05.2015**
(21) Application number: 13397536.7
(22) Date of filing: 04.11.2013
(51) Int. Cl.: H02J 7/34, H02M 3/156

(54) **Power converter with a power optimized output**

(71) Applicant: Soil Scout Oy, 00720 Helsinki (FI)
(72) Inventor: Tiusanen, Johannes, 28450 Vanha-Ulvila (FI); Sirkiä, Jussi, 21500 Piikkiö (FI)
(74) Representative: Väisänen, Olli Jaakko

(57) **Abstract**

Power converter (19, 29) for the generation of power adjusted electrical operating conditions over a time window, the power converter (19, 29) comprises connection means (21), configured to establish electric contact to a deployable battery (11); a temporal, electrical energy storage (C, C3, C6, C7) configured to be electrically charged by the deployable battery (11) using the connection means (21); a DC-to-DC converter (12, 20) configured to up-convert a low input voltage into a high output voltage, whereas the low input voltage and input current of the DC-to-DC converter (12, 20) are dependent on or identical to the discharge voltage and the discharge current of the temporal, electrical energy storage (C, C3, C6, C7), respectively.

The output power of the power converter (19, 29) during the time window is higher than the output power of the deployable battery (11).

## Description

### FIELD OF INVENTION

The invention relates to a power converter for the generation of power adjusted electrical operating conditions over a time window. The invention further relates to a power supply with said power converter.

### BACKGROUND OF INVENTION

Power converters are typically used to overcome limitations given by the energy source, such as batteries or rechargeable batteries. Both of them are electric current limited devices, due to their intrinsic resistance. Sometimes driving voltages are required that cannot be supplied by said battery or rechargeable battery. However, the energy content of the respective battery can still be used if a so called DC-to-DC up-conversion is employed.

The DC-to-DC up-converter is capable of passing a high percentage of the electric power on, whereby the output voltage of the converter is increased in comparison to the output voltage of the battery. Simultaneously the driving current is decreased, due to the limited amount of power available. Instead of an up-conversion also a down-conversion is feasible, where the output voltage of the converter is below the output voltage of the respective battery and the output currents reach much higher values.

Typical examples of deployment of said boost converters are, for instance, disclosed in the data sheet of the boost converters TPS 61020, TPS 61024, TPS 61025, TPS 61026, TPS 61027, TPS 61028, TPS 61029, by Texas Instruments, "96 % Efficient Synchronous Boost Converter", SLVS451F-September 2003-revised April 2012. In said data sheet a couple of electric circuits for advantageous operation of said boost converter are suggested. Said circuits focus on the adjustment of the input voltage originating from the battery and also the output voltage. Such devices require in general some external component adjustment for setting the operational properties including how to compensate for temporal fluctuations using capacitors of low capacitance in the µF region.

For high power applications the present up-conversion circuits and boost converters are very much limited to the power, which is generated by the used energy source, such as a rechargeable battery or a non-rechargeable battery. If the boost converter is, for example, used to drive a high power radio emitter, it is crucial that the used energy source has a long lifetime and it also needs to mobilize the required power for emitting relevant information.

In fact, batteries having a long lifetime and high capacity, with typically an internal discharge of less than 0.5% per year, unfortunately, also have the weakest capability of producing output current. On the other hand high current batteries have a lower capacity, but also a shorter lifetime. Therefore, it remains challenging to guarantee high current output and a long battery life simultaneously.

### SUMMARY OF THE INVENTION

The Inventor recognized that the battery lifetime needs to be stretched as far as possible in a couple of applications. For example, one application would be the monitoring of the migration of marine life in oceans, where the respective animals of interest, such as sharks, dolphins or the like, are tagged with an emitter each being powered by a battery. For the radio bursts the radio emitter needs a high voltage as well as a high operational current, whereas at the same time the battery needs to last for several years, ideally, as long as the lifetime of the monitored marine animal.

The invention is driven by the insight that the currently used batteries and rechargeable batteries are considerably limiting the output characteristics of the boost converters. The invention seeks to drive the load, such as the emitter in the mentioned marine application, independently from the limitations given by the energy source.

Another aim of the invention is the reduction or avoidance of the maintenance requirement, which goes hand in hand with prolonging the battery lifetime.

According to the invention the power converter for the generation of power adjusted electrical operating conditions over a time window, comprises:
- connection means, configured to establish electric contact to a deployable battery;
- a temporal, electrical energy storage configured to be electrically charged by the deployable battery using the connection means;
- a DC-to-DC converter configured to up-convert a low input voltage into a high output voltage, whereas the low input voltage and input current of the DC-to-DC converter are dependent on or identical to the discharge voltage and the discharge of temporal, electrical energy storage, respectively;
whereas the output power of the power converter during the time window is higher than the output power of the deployable battery.

The temporal, electrical energy storage is configured to electrically charge up by obtaining energy from the deployable battery. Then the temporal, electrical energy storage provides said energy to the DC-to-DC converter. This is advantageous, because the temporal, electrical energy storage does not need to have the limiting characteristics of the battery based energy sources, which are typically used in the prior art. In particular, said temporal storage can provide the energy to the DC-to-DC converter in a very short time, without being hampered by any intrinsic resistance. This way it is possible to supply an output electric current which is considerably higher than the maximum output current of the deployable battery. Now it is possible, that the power, which is supplied during the time window, can be much higher depending on the amount of the energy, which has been stored in the temporal electrical energy storage, and also on the chosen duration of the time window. In other words, the temporal, electrical energy storage is chosen to contain all the energy, which is needed over the duration of the time window (burst) of power at the output of the DC-to-DC converter. Of course, the DC-to-DC converter will have some losses, but in general the energy, which is stored in said storage is mainly used to drive the device or load, which is meant to be powered, for example, a radio emitter.

The DC-to-DC converter is a converter that transforms a direct current (DC) into another direct current (DC) having other characteristics in terms of the electric current amount or its corresponding voltage, whereas both, voltage and current are meant to hardly or not all comprise any time dependence.

The input voltage of the DC-to-DC converter is directly or indirectly defined by the output voltage of the temporal, electrical energy storage. Said voltage may also be adjusted by voltage dividers or the like, but in any case the input voltage of the DC-to-DC converter is mainly originated from said storage. Additionally, the temporal, electrical energy storage hardly limits the input current, allowing the DC-to-DC converter to dispose of high output currents.

Consequently, only the energy still is originated from the deployable battery. In terms of power the input is readjusted when being supplied to the DC-to-DC converter during a discharge phase of the temporal, electrical energy storage. Within the time window it is possible to maintain a higher power at the output of the power converter than the deployable battery as such would allow. On the other hand, the operational mode of the power converter is a boost mode, which is limited in time and interrupted for longer time periods, which are needed for recharging the temporal, electrical energy storage. However, if the boost of power is sufficient to run the device or any other load during the time window, it might not be necessary to supply any more power within a longer period of time anyway. This is the case in the example mentioned earlier regarding the monitoring of marine life and also other applications. At the end of a time window of increased power the task of the load or the device has completed. In the following time window another task is fulfilled. One task could be, for example, the sending of a radio burst with certain information or else.

Advantageously, the connection means are configured to contact the poles of the deployable battery and provide the battery voltage and electric current to the electrical circuit, in particular, the temporal, electrical energy storage. The connection means, advantageously, consist of or comprise a clamp contact, crocodile clips, a battery compartment or battery housing. Alternatively, the connection means comprise or consist of contacts for soldering the poles of the deployable battery to said contacts and thereby electrically connect the deployable battery permanently to the connection means and the radio signal emitting node. Preferably, the deployable battery is coated into poly-urethane for protection after soldering. Hence, said node is only operable during the lifetime of the permanently connected, deployable battery.

In a preferred embodiment the power converter comprises between the connection means and the temporal, electrical energy storage a current limiting element, preferably a resistor, being configured to limit the charging current from the deployable battery to the temporal, electrical energy storage. This is advantageous, because the temporal, electrical energy storage may have very low intrinsic resistance or almost none intrinsic resistance, causing a very high, almost infinite charging current during the charging phase of said storage. Consequently, due to the intrinsic resistance of the deployable battery, said battery might heat up very rapidly and be damaged during the course of the charging phase. Other batteries, if used as deployable batteries, may simply drop in output voltage too strongly when supplying high charging currents. Therefore the electric current limiting element protects the operation of the deployable battery and facilitates the deployment of the temporal, electrical energy storage with ideally no intrinsic resistance. A high capacity, deployable battery would supply a high charging current energy, but at very poor discharge efficiency, resulting in a diminished total capacity, constituted of the capacities of the temporal, electrical energy storage and of the deployable battery. Therefore a high capacity deployable battery is not a good option.

In a preferred embodiment an input switch is configured to interrupt electrical connection between the temporal, electrical energy storage and the connection means. Hence the input switch is configured to interrupt the charging current coming from the deployable battery for loading the temporal, electrical energy storage. When using said input switch it is possible to counteract the energy draining effect of possible leak currents, which might occur in the temporal, electrical energy storage. During the charging phase it is not possible to avoid an energy loss due to said currents, however, it is possible to disconnect the deployable battery and the temporal, electrical energy storage from each other and thereby avoid any drainage during the time the temporal, electrical energy storage is uncharged. Even during the discharge phase, when the energy is supplied to the DC-to-DC converter, the input switch might be already open. Generally speaking, most energy is saved with the input switch being open nearly all the time, except while charging the temporal, electric energy storage.

In a preferred embodiment the power converter or an external control unit is configured to close the input switch when the temporal, electrical energy storage is in an uncharged state or in a discharging state. A microcontroller might be used to control the input switch. Alternatively, the input switch might be operated by a passive circuit, which is optionally connected to the DC-to-DC converter.

In a preferred embodiment the temporal, electrical energy storage comprises or consists of a rechargeable battery, a capacitor, a supercapacitor or a tantalum capacitor. Advantageously, the number of capacitors can be used and switched in parallel in order to form a sufficiently large capacitance for the desired energy. Also rechargeable batteries might be used, whose intrinsic resistance is low enough to allow a reasonable fast discharge current. Also supercapacitors are useful, since they - by definition - comprise a very high capacitance and store enormous amounts of energy. The tantalum capacitors are especially preferred, because they have a very low leak current, which enlarges the lifetime of the deployable battery considerably.

Supercapacitors belong to the family of electrochemical capacitors. They are also known as ultracapacitors or electric double-layer capacitors. Their capacitance value is determined by two storage principles, both of which contribute to the total capacitance. One principle is the capacitance contribution based on electrostatics. The other principle is based on a chemical reaction, such as a redox reaction. The ratio of the storage resulting from each principle can vary greatly, depending on electrode design and electrolyte composition. The latter type of capacitance is also called pseudocapacitance.

Advantageously, the capacitance of the temporal, electrical energy storage is greater than 0.5 mF, preferably 1 to 10 mF. Such capacitance is extremely useful to use in combination with standard batteries of a few Volts output voltage. Since the magnitude of the charging current is not of importance thanks to the invention, the deployable battery might be selected by its energy content. If also a current limiting element is used, for example a resistor, it constitutes together with the temporal, electrical energy storage an RC band pass filter having a cut-off frequency f_{c}= (2*Π*τ)^{-0.5}, with the time constant τ = RC, which turns the power converter useless for filtering. Hereby the current rise time tᵣ from 10% to 90% is given by tᵣ = 2.2*τ. For best energy charging and discharging behavior f_{c} is typically smaller than 0.2 Hz, preferably 0.14 Hz. For example, if high frequencies are meant to be filtered, there needs to be another capacitor with a smaller capacitance of 1 to 100 µF somewhere in the circuit.

In a preferred embodiment the time window has a duration of less than 10% of the interval between windows, preferably a duration of 2 to 3 ms and most preferably the time window being open not more than once in an hour. The time window of said duration may also be called a burst. During this burst all the tasks of the driven unit or load need to be accomplished. Alternatively, the task may require repeated burst operation, whereby the respective participating bursts are timely separated in order to allow recharging of the temporal electrical energy storage. The duration of 2 to 3 ms is usually enough for most standard circuits to accomplish the completion of the task or a major part of it.

Advantageously the output voltage of the power converter and the output current of the power converter are within the intervals 2.0 V to 5.5 V and 100 to 3000 mA, respectively. The electrical powers, which can be supplied this way correspond already to typical driving powers, which are used for many electrical appliances and laboratory devices also driven by standard power supplies connected to the power network. Hence, the power converter enables the usage of said devices independently from any power supplying network.

In a preferred embodiment the charging and discharging of the temporal, electrical energy storage is triggered by the power converter itself or by an external signal, preferably a wireless signal. This way the power converter can be operated remotely when it is needed. Alternatively, it is possible to have the power converter run at regular time intervals, such as hours, in particular one hour, one day, or one month.

The invention also proposes a power supply with said power converter, whereas such the power supply can have several advantages, such as independence from any power supplying network or a very convenient size.

Other favorable embodiments and advantageous implementations of the invention are described in the drawings or the dependent claims.

### BRIEF DESCRIPTION OF THE DRAWINGS

In the following, the invention is explained in more detail with reference to the examples shown in the attached drawings in FIG 1 to 2, of which:
- FIG 1: shows a schematic electrical circuit of a power converter with a deployable battery, and
- FIG 2: shows an electronic circuit of an embodiment of a power converter according to the invention based on a DC-to-DC converter.

Same reference numerals refer to same components in all FIGs.

### DETAILED DESCRIPTION OF PREFERRED EMBODIMENTS

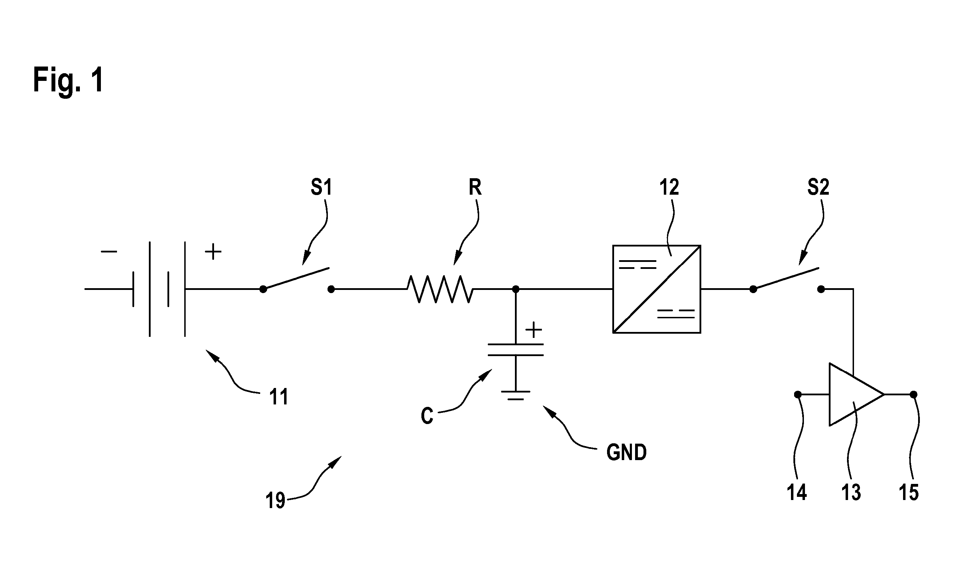

FIG 1 shows a power converter 19 in a schematic view. The power converter 19 is powered by the deployable battery 11, which supplies a charging current to the capacitor C via a resistor R and across the input switch S1. The DC-to-DC converter 12 receives the energy input from the capacitor C and supplies its output to an amplifier 13 having an input 14 and an output 15, whereas the amplifier 13 takes the role of the device/load, which is supposed to be driven by the power converter 19.

The deployable battery 11 is in electrical contact with connection means, which are configured to establish electric contact between the deployable battery 11 and the capacitor C. The charging current coming from the deployable battery 11 is limited by the resistance R. This way the deployable battery 11 is protected from too strong charging currents when charging the capacitor C. Since capacitor C has practically no resistance it discharges almost instantly the electric energy stored therein. Consequently, capacitor C is capable of providing almost infinite current. The capacitance value of the capacitor C is chosen according to energy burst requirements of the application.

The application might consist of a radio emitter, comprising the electrical amplifier 13. The discharge of capacitor C makes the DC-to-DC converter generate a burst of power, which is sufficient to complete one radio emission action. This radio emission action is ideally requested remotely by a radio station, which also receives the emitted radio signal containing information of interest.

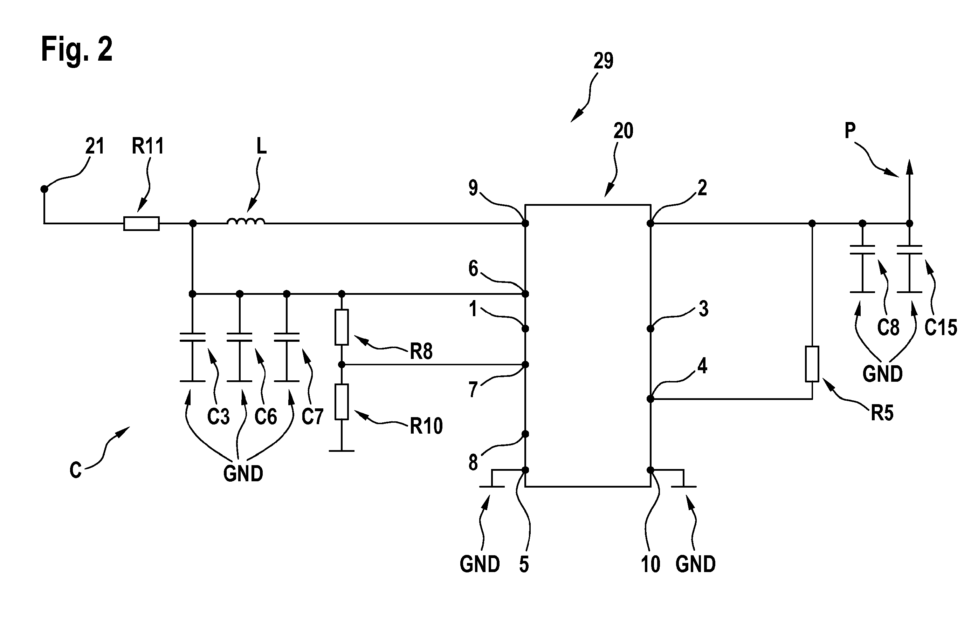

Most advantageously, the electrical amplifier 13, or instead any other load, are operable with precisely engineered electrical operational conditions. In particular, the output voltage of the DC-to-DC converter is maintained at the same level during the time window, enabling a steady operation. Without the DC-to-DC converter the input voltage of the load would considerably decrease within the time window and endanger the proper functioning of the load, or like in embodiment of FIG 2, the amplifier 13. It would take an effect of an undesired and uncontrolled shortening of the time window leaving the emission action, or any other action, uncompleted.

The discharging voltage of the capacitor C is the input voltage of the DC-to-DC converter 12, which can be transformed to higher output voltages by the DC-to-DC converter 12. The output switch S2 might be controllable by the DC-to-DC converter in order to start the power burst, in other words, start the operation of the amplifier 13. Switch S2 can be useful, if the output voltage of the DC-to-DC converter 12 needs a certain time during or after the discharge phase of capacitor C, to build up before being applied to the load represented by the amplifier 13.

The output switch S2 is either external or internal to the DC-to-DC converter. The DC-to-DC converter 12 may be powered up and active, but the output may remain disengaged until an activation request is issued.

FIG 2 shows an electronic circuit of an embodiment of a power converter 29 according to the invention based on a DC-to-DC converter. Information about the operation principle and specifications of DC-to-DC converter is contained in the data sheet of the boost converters TPS 61020, TPS 61024, TPS 61025, TPS 61026, TPS 61027, TPS 61028, TPS 61029 by Texas Instruments called "96 % Efficient Synchronous Boost Converter", SLVS451F-September 2003-revised April 2012. The disclosure of the latter data sheet by Texas Instruments is herewith incorporated by reference into the disclosure of this document.

The connection means 21 are used for connecting a deployable battery, which is not shown, to provide charging current to the capacitors C3, C6, C7 forming the temporal, electrical energy storage, referred to as the capacitor C, just like in FIG 1. In other words, the capacitor C comprises the capacitors C3, C6, C7 having the capacitances 1mF, 1mF and 100nF, respectively. The capacitance of capacitor C can be increased by using several storage units, such as capacitors, which are connected in a parallel fashion to each other. This way cheap capacitors may be used to constitute the desired capacitance. Every parallel connected capacitor contributes to the capacitance of capacitor C of the temporal, electrical energy storage. In case of capacitor C7 also DC/DC transients can be stabilized. In other words, capacitor C7 is also used as a filter.

R11 is a resistance used for limiting the charging current coming from the deployable battery, for example a lithium battery. In this embodiment the charging current from the deployable battery supplying between 3,3 V to 5 V is limited to 5 mA. The charging phase lasts for about 5 seconds, governed by a given capacitance of approximately 2000.1 µF of capacitor C.

Pin 9 is the input pin, where the stored energy of capacitor C is fed into the DC-to-DC converter 20. At the corresponding output pin 2 a burst of output power is produced completing the DC-to-DC conversion.

The resistors R8, R10 are used to divide up the output voltage of capacitor C. Said divided voltage is applied to pin 7 of the DC-to-DC converter 20. The input of pin 7 is used to check whether the DC-to-DC converter 20 actually receives an input voltage at pin 6 for the control stage. The voltage monitor signal can be taken from pin 4. If there is not sufficient or no input at all, the deployable battery might have run out of energy.

The capacitors C8 and C15 are used to smoothen out the output of the DC-to-DC converter 20 at pin 2. Their capacitance can be chosen accordingly. The load or the device to be powered is connected at the connection P.

The DC-to-DC converter 20 might be externally triggered to either initiate the charging phase for the capacitors C3, C5 and C7 and/or initiate the opening of the time window (start the output burst) by applying an activation voltage to pin 1.

In summary, the invention is intended for storing a lot of energy from a small current source 11 into a temporary storage, enabling a very high current output burst at a high or low output voltage. The invention recognizes that batteries have problems with their internal impedance, whereas capacitors do not. Therefore the capacitance of capacitor C is chosen to supply energy to the DC-to-DC converter 12, 20 enabling a power burst, which is easily definable in its output voltage and its output current.

### REFERENCE NUMERALS USED:

- C: capacitor; temporal, electrical energy storage
- GND: ground
- R: current limiting resistor
- S1: input switch
- S2: output switch
- P: connection to the load
- L: inductive element

- 1: enable input pin
- 2: output pin
- 3: pin
- 4: voltage monitoring output pin
- 5: pin for grounding
- 6: power supply pin for the control stage
- 7: voltage monitoring input pin
- 8: pin
- 9: pin
- 10: pin for grounding
- 11: deployable battery
- 12: DC-to-DC converter
- 13: electrical amplifier
- 14: amplifier input
- 15: amplifier output
- 20: DC-to-DC converter
- 21: connection means for deployable battery

## Claims

1. Power converter (19, 29) for the generation of power adjusted electrical operating conditions over a time window, the power converter (19, 29) comprising:
- connection means (21), configured to establish electric contact to a deployable battery (11);
- a temporal, electrical energy storage (C, C3, C6, C7) configured to be electrically charged by the deployable battery (11) using the connection means (21) ;
- a DC-to-DC converter (12, 20) configured to up-convert a low input voltage into a high output voltage, whereas the low input voltage and input current of the DC-to-DC converter (12, 20) are dependent on or identical to the discharge voltage and the discharge current of the temporal, electrical energy storage (C, C3, C6, C7), respectively;
whereas the output power of the power converter (19, 29) during the time window is higher than the output power of the deployable battery (11).

2. Converter (19, 29) according to claim 1, whereas between the connection means (21) and the temporal, electrical energy storage (C, C3, C6, C7) a current limiting element, preferably a resistor (R, R11), is configured to limit the charging current from the deployable battery (11) to the temporal, electrical energy storage (C, C3, C6, C7).

3. Converter (19, 29) according to any one of the preceding claims, whereas an input switch (S1) is configured to interrupt electrical connection between the temporal, electrical energy storage (C, C3, C6, C7) and the connection means (21).

4. Converter (19, 29) according to any one of the preceding claims, whereas the power converter (19, 29) or an external control unit is configured to close the input switch (S1) when the temporal, electrical energy storage (C, C3, C6, C7) is in an uncharged state or in a discharging state.

5. Power converter (19, 29) according to any one of the preceding claims, whereas the temporal, electrical energy storage (C, C3, C6, C7) comprises or consists of a rechargeable battery, a capacitor (C3, C6, C7), a supercapacitor or a tantalum capacitor.

6. Power converter (19, 29) according to claim 5, whereas a capacitance of the temporal, electrical energy storage (C, C3, C6, C7) is greater than 0.5 mF, preferably 1 to 10 mF.

7. Power converter (19, 29) according to any one of the preceding claims, whereas the time window has a duration of less than 10% of the interval between windows, preferably a duration of 2 to 3 ms and most preferably the time window being open not more than once in an hour.

8. Power converter (19, 29) according to claim 7, whereas the output voltage of the power converter (19, 29) and the output current of the power converter (19, 29) are within the intervals 2.0 V to 5.5 V and 100 to 3000 mA, respectively.

9. Power converter (19, 29) according to any one of the preceding claims, whereas the charging and discharging of the temporal, electrical energy storage (C, C3, C6, C7) is triggered by a converter-external signal.

10. Power supply with a power converter (19, 29) according to any one of the preceding claims.
